# FASCICULE DE BREVET EUROPEEN

(11) **EP 0 926 809 B1**
(45) Date de publication et mention de la délivrance du brevet: **18.09.2002**
(21) Numéro de dépôt: 98403292.0
(22) Date de dépôt: 22.12.1998
(51) Int. Cl.: H02P 1/28, H02P 3/18

(54) **Appareil de commande d'un moteur électrique**
Regelvorrichtung für einen elektrischen Motor
Control device for an electric motor

(30) Priorité: 24.12.1997 FR 9716866; 14.04.1998 FR 9804808
(43) Date de publication de la demande: 30.06.1999
(73) Titulaire: Schneider Electric Industries SAS, 92500 Rueil-Malmaison (FR)
(72) Inventeur: Hertzog, Nicolas, 92500 Rueil-Malmaison (FR); Jacq, Jacques, 95520 Osny (FR); Lange, Christian, 77610 Fontenay Tresigny (FR); Ourth, Thierry, 75015 Paris (FR); Romillon, Jean-Marc, 78980 Longnes (FR)

(56) Documents cités:
- EP-A- 0 149 873
- GB-A- 2 165 408
- US-A- 4 142 136
- US-A- 4 996 469

## Description

La présente invention concerne un appareil de commande d'un moteur électrique polyphasé, comprenant deux phases sur chacune desquelles est disposé un interrupteur statique bidirectionnel associé à un pôle de contacteur de shuntage monté en parallèle, ces interrupteurs étant pilotés par un circuit de commande assurant un fonctionnement gradué du moteur.

On connaît des appareils de commande de moteurs asynchrones triphasés aptes à assurer des démarrages ou arrêts progressifs, en douceur, en évitant les à-coups. Ils comportent des interrupteurs statiques constitués par des thyristors montés tête-bêche et associés, en parallèle, à un contacteur de shuntage. Ces interrupteurs sont pilotés par un circuit de commande électronique.

Les documents US 4 396 469, FR 0 149 873 et US 4 142 136 décrivent des appareils de commande de moteurs asynchrones triphasés dans lesquels sur chacune des trois phases il y a un interrupteur statique ou électronique bidirectionnel. Cette solution est pénalisante pour des appareils à bas prix.

Il est intéressant pour des raisons économiques d'avoir un appareil dans lequel le départ du moteur est contrôlé sur deux phases, la troisième phase étant dépourvue d'interrupteur. Le contacteur de shuntage de type polyphasé comporte deux pôles montés en parallèle sur les phases pourvues d'interrupteurs, la troisième phase n'étant alors ni contrôlée par un interrupteur ni shuntée par un pôle. Le contacteur fonctionne en monophasé et ses performances sont fortement dégradées. Dans certaines situations, on observe l'apparition d'arcs électriques entre les contacts du contacteur de shuntage.

La présente invention a pour but d'associer à l'appareil selon l'invention, sur le réseau triphasé d'alimentation du moteur, un contacteur de shuntage conçu pour couper des courants triphasés mais coupant le courant comme en monophasé, cela sans diminuer les performances (la coupure sur deux phases d'un réseau triphasé est comparable à une coupure monophasée du fait que le temps de coupure est plus long). Elle a pour but d'éviter la détérioration des contacts à la fermeture et à l'ouverture. De plus, en cas de baisse de tension, si le contacteur retombe sans ordre, les thyristors assurent la continuité du service.

L'appareil selon l'invention est caractérisé en ce qu'une phase n'est ni contrôlée par un interrupteur statique bidirectionnel ni shuntée par un pôle de shuntage et que le circuit de commande comporte des moyens pour envoyer en permanence des impulsions sur les interrupteurs statiques bidirectionnels, un peu avant l'ordre de fermeture du contacteur de shuntage jusqu'à un peu après l'ordre d'ouverture de ce même contacteur.

Selon une caractéristique, le circuit de commande comporte un circuit générateur de tension dite de rampe dont la tension de sortie est envoyée à un circuit de commande de l'interrupteur de shuntage, à un circuit de génération d'impulsions synchrones et à un circuit de génération d'impulsions asynchrones, ces deux circuits pilotant l'allumeur des interrupteurs statiques.

Selon une caractéristique, le circuit de commande du contacteur de shuntage comprend des moyens pour commander la fermeture de ce contacteur lorsque la tension de sortie du générateur de rampe atteint une tension de shuntage.

Selon une caractéristique, l'appareil comprend des moyens pour piloter le circuit de génération d'impulsions synchrones ou le circuit de génération d'impulsions asynchrones de manière à injecter alternativement, sur les interrupteurs statiques, des impulsions asynchrones ou des impulsions synchronisées sur le courant.

L'invention va maintenant être décrite avec plus de détail en se référant à un mode de réalisation donné à titre d'exemple et représenté par les dessins annexés sur lesquels:
- la figure 1 est un schéma fonctionnel de l'appareil selon l'invention;
- la figure 2 est un chronogramme illustrant le fonctionnement de différents circuits de l'appareil;
- la figure 3 est un schéma du circuit de commande du contacteur de shuntage;
- la figure 4 est un schéma du circuit d'impulsicns asynchrones ;
- la figure 5 est un vue du contacteur de shuntage équipé de pièces de connexion massives.

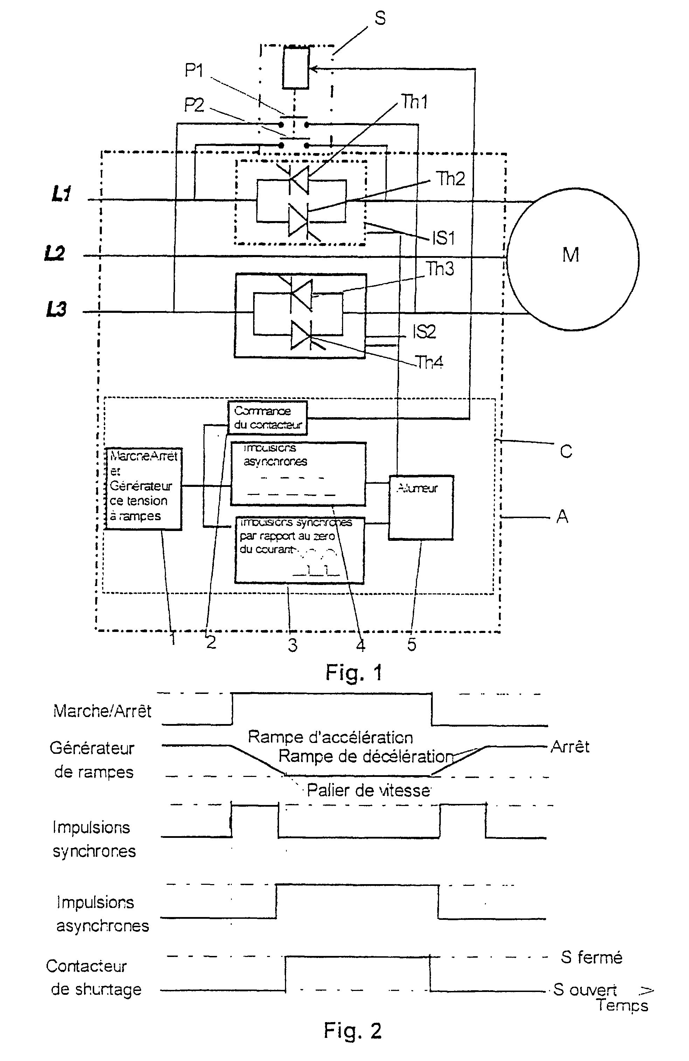

En se référant à la figure 1, un appareil, repéré A, délivre, à un moteur électrique M. une alimentation électrique progressive, pendant les phases de démarrage cu d'accélération d'une part et pendant les phases de ralentissement ou de décélération d'autre part. Il est branché sur les lignes d'alimentation L1, L2, L3 du moteur. Il comporte, sur les deux phases L1 et L3, des interrupteurs statiques bidirectionnels repérés respectivement IS1 et IS2. Chacun de ces interrupteurs IS1 ou IS2 est constitué par deux thyristors Th1-Th2 ou Th3-Th4 respectivement, montés en parallèle, tête-bêche, de manière à laisser passer le courant alternatif lorsqu'ils sont conducteurs. Ces thyristors pourraient être remplacés par un composant de puissance similaire.

Les thyristors des interrupteurs statiques sont pilotés par un circuit de commande C qui, par l'intermédiaire d'un allumeur 5, envoie des impulsions sur les gâchettes de ces thyristors, de manière à les rendre passants.

Aux bornes de l'interrupteur statique IS1, est branché, par un circuit dérivé, un pôle de coupure P1 d'un contacteur de shuntage S. De même aux bernes de l'interrupteur statique IS2, est branché, par un circuit dérivé, le pôle de coupure F2 du contacteur de shuntage S. On note que la phase L2 n'est ni contrôlée par des thyristors, ni shuntée par un pôle du contacteur S.

Ce contacteur de shuntage S, est commandé par le circuit de commande C de manière à court-circuiter les interrupteurs statiques IS1 et IS2, depuis la fin d'une rampe d'accélération jusqu'au début de la rampe de décélération suivante.

Le contacteur de shuntage S peut être de type tétrapolaire, les pôles de coupure étant associés par paires aux deux interrupteurs statiques.

Le circuit de commande C comporte un générateur de tension 1 qui génère, en sortie, une tension dite de rampe Vr se décomposant en une rampe décroissante (pendant une phase d'accélération), en un palier correspondant à la vitesse nominale du moteur, et en une rampe croissante (pendant la phase de décélération suivante). Cette tension de rampe Vr est injectée sur un circuit de commande 2 commandant le contacteur de shuntage S, sur un circuit 3 de génération d'impuisions synchrones envoyant lesdites impulsions à l'allumeur 5 des thyristors et sur un circuit 4 de génération d'impulsions asynchrones envoyant les dites impulsions au même allumeur 5. Ce dernier isole et injecte les impulsions sur les gâchettes des thyristcrs de l'interrupteur statique IS1 et/ou sur les gâchettes des thyristors de l'interrupteurs statique IS2.

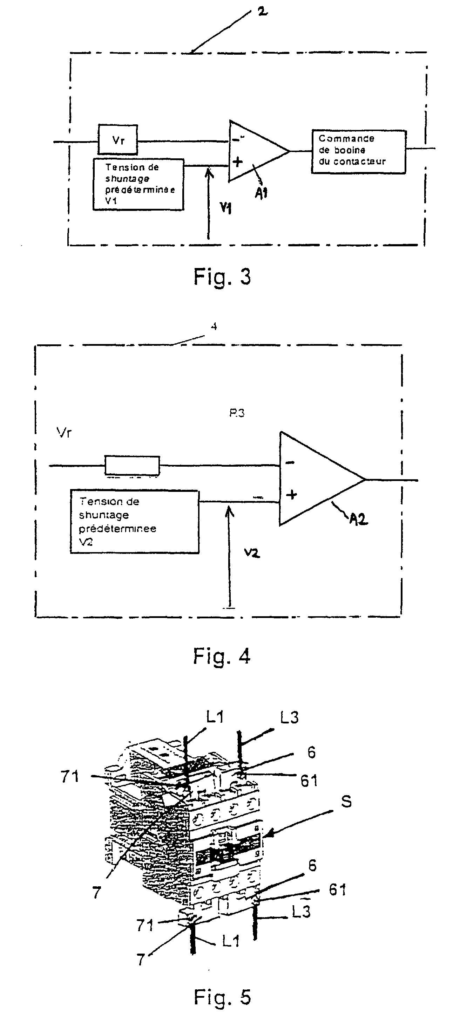

Le circuit de commande du shuntage 2 représenté à la figure 3 comprend un comparateur A1 recevant, sur ses entrées, la tension de rampe Vr du générateur de rampe 1 et une tension prédéterminée dite de shuntage que l'on notera V1. Lorsque la tension de rampe délivrée par le générateur de rampe atteint une valeur égale ou inférieure à la tension de shuntage V1, la sortie du comparateur A1 commute et commande la fermeture de l'interrupteur de shuntage S.

Le circuit 4, représenté à la figure 4, comprend un comparateur A2 qui reçoit, sur ses entrées, la tension Vr du générateur de rampe 1 et une tension de référence V2. Lorsque la tension envoyée par le générateur de rampe atteint une valeur égale ou inférieure au seuil de tension V2, !a sortie du comparateur A2 fait changer de niveau le signal de pilotage qui pilote l'allumeur 5. Le seuil de tension V1 est inférieur au seuil de tension V2.

L'allumeur 5 injecte, alternativement, sur les gâchettes des thyristors, en fonction du signal de pilotage, des impuisions de fréquences variables. Lorsque le signal de pilotage est à un premier niveau, l'allumeur 5 délivre les impulsions synchronisées sur le courant, ceci perdant les phases d'accélération ou de décélération. Lorsque ce signal est à un second niveau, l'allumeur 5 délivre alors les impulsions non synchronisées sur le courant mais de fréquences plus élevées, ceci pendant le palier à vitesse nominale.

En se référant à la figure 5. le contacteur de shuntage S est du type tétrapolaire. Aux bornes de ce contacteur sont montées des pièces de connexion massives 6, 7 reliant chacune deux bornes dudit contacteur, ces pièces de connexion 6, 7 étant reliées par paires, par l'intermédiaire de câbles ou fils L1, L3, aux bornes des interrupteurs statiques IS1, IS2 de manière que chacun soit connecté à deux pôles.

Chacune des pièces de connexion 6, 7 est pourvue d'une borne 61, 71 pour connecter un câble ou fil L1, L3 relié à une borne d'interrupteur statique IS1 ou IS2. Ces pièces de connexion massives 6, 7 font office de radiateurs et servent au refroidissement.

Le fonctionnement de l'appareillage est le suivant:

Lorsque le moteur est à l'arrêt, aucune impulsion n'est appliquée sur les gâchettes des thyristors qui ne sont donc pas passants.

Le générateur de tension à rampes 1 fournit une tension décroissante pendant une phase d'accélération. Le circuit de commande 2 applique, sur les gâchettes des thyristors, des impulsions qui sont synchronisées par rapport au zéro de courant ou au zéro de tension. Ces impulsions « synchrones » provoquent aux bornes du moteur une augmentation de la tension efficace, à chaque alternance du réseau d'alimentation. Le contacteur de shuntage S reste ouvert pendant cette phase d'accélération.

Considérons la fin de cette phase d'accélération et le passage à la phase de palier, à vitesse nominale. Lorsque le seuil V2 est atteint, des impulsions de fréquence plus élevée sont appliquées sur les gâchettes des thyristors. Le circuit de shuntage 2 commande la fermeture du contacteur de shuntage S à une tension V1 dite de « shuntage », inférieure à la tension V2. Dès que le contacteur de shuntage S est fermé, du courant passe par ses pôles et le courant passant par les thyristors s'annule.

Les impulsions de fréquence élevée, constante et « asynchrones » sont appliquées en permanence aux gâchettes des thyristors pendant tout le palier correspondant à la « vitesse normale ».

Le générateur de tension 1 fournit une tension croissante pendant une phase de décélération conduisant ou non à l'arrêt du moteur. A la tension V1, le circuit 2 commande l'ouverture du contacteur de shuntage S. A la tension V2, les impulsions «synchrones » sont envoyées aux thyristors. Ces impulsions créent une diminution de la tension efficace aux bornes du moteur. On note que l'ouverture du contacteur de shuntage S se produit lorsque des impulsions de fréquence élevées sont envoyées aux thyristors.

Dès que la rampe de décélération est terminée, le moteur est à l'arrêt.

Les gâchettes des thyristors reçoivent des impulsions en permanence un peu avant que le contacteur de shuntage reçoive l'ordre de fermeture et un peu après que ce contacteur de shuntage reçoive l'ordre d'ouverture.

## Revendications

1. Appareil de commande d'un moteur électrique polyphasé (M), comprenant deux phases (L1, L3) sur chacune desquelles est disposé un interrupteur statique bidirectionnel (IS1, IS2) associé à un pôle de contacteur de shuntage (S) monté en parallèle, ces interrupteurs (IS1, IS2, S) étant pilotés par un circuit de commande (C) assurant un fonctionnement gradué du moteur, **caractérisé en ce qu'**une phase (L2) n'est ni contrôlée par un interrupteur statique bidirectionnel ni shuntée par un pôle de shuntage et que le circuit de commande (C) comporte des moyens (1, 3, 4, 5) pour envoyer en permanence des impulsions sur les interrupteurs statiques bidirectionnels (IS1, IS2), un peu avant l'ordre de fermeture du contacteur de shuntage (S) jusqu'à un peu après l'ordre d'ouverture de ce même contacteur.

2. Appareil selon la revendication 1, **caractérisé en ce que** le circuit de commande (C) comporte un circuit générateur de tension dite de rampe (1) dont la tension de sortie est envoyée à un circuit de commande (2) de l'interrupteur de shuntage (S), à un circuit (3) de génération d'impulsions synchrones et à un circuit (4) de génération d'impulsions asynchrones, ces deux circuits (3, 4) pilotant l'allumeur (5) des interrupteurs statiques (IS1, IS2).

3. Appareil selon la revendication 1 ou 2, **caractérisé en ce que** le circuit de commande (2) du contacteur de shuntage (S) comprend des moyens pour commander la fermeture de ce contacteur (S) lorsque la tension de sortie (Vr) du générateur de rampe (1) atteint une tension de shuntage (V1).

4. Appareil selon la revendication 3, **caractérisé en ce que** le cicuit de commande comprend des moyens pour comparer la tension de sortie (Vr) du générateur de rampe (1) à la tension dite de shuntage (V1).

5. Appareil selon l'une quelconque des revendications 2 à 4, **caractérisé** en qu'il comprend des moyens pour piloter le circuit (3) de génération d'impulsions synchrones ou le circuit (4) de génération d'impulsions asynchrones de manière à injecter alternativement, sur les interrupteurs statiques (IS1, IS2), des impulsions asynchrones ou des impulsions synchronisées sur le courant.

6. Appareil selon l'une quelconque des revendications précédentes, **caractérisé** en qu'il comporte des moyens (5) pour déclencher le passage de l'injection des impulsions synchrones aux impulsions asynchrones et vice-versa pour une tension de rampe (V2) supérieure à la tension de shuntage (V1).

7. Appareil selon l'une quelconque des revendications précédentes, **caractérisé en ce que** le contacteur de shuntage (S) est un contacteur tétrapolaire monté de manière qu'à chaque interrupteur statique (IS1 ou IS2) soient associés deux pôles de ce contacteur.

## Claims

1. A control unit for a polyphase electric motor (M), comprising two phases (L1, L3) on each of which is positioned a bidirectional static switch (IS1, IS2) associated with a shunt contactor pole (S) mounted in parallel, these switches (IS1, IS2, S) being driven by a control circuit (C) providing gradual operation of the motor, **characterized in that** one phase (L2) is neither controlled by a bidirectional static switch nor shunted by a shunt pole, and that the control circuit (C) includes means (1,3,4,5) for continuously transmitting pulses onto the bidirectional static switches (IS1, IS2), from a little before the command for closing the shunt contactor (S) to a little after the command for opening this same contactor.

2. The unit according to claim 1, **characterized in that** the control circuit (C) includes a so-called ramp voltage generator circuit (1), the output voltage of which is transmitted to a circuit (2) for controlling the shunt switch (S), to a circuit (3) for generating synchronous pulses and to a circuit (4) for generating asynchronous pulses, both of these circuits (3, 4) driving the igniter (5) of the static switches (IS1, IS2).

3. The unit according to claim 1 or 2, **characterized in that** the control circuit (2) for the shunt contactor (S) comprises means for controlling the closing of this contactor (S) when the output voltage (Vr) of the ramp generator (1) reaches a shunt voltage (VI) .

4. The unit according to claim 3, **characterized in that** the control circuit comprises means for comparing the output voltage (Vr) of the ramp generator (1) with the so-called shunt voltage V1).

5. The unit according to any of claims 2 to 4, **characterized in that** it comprises means for driving the synchronous pulse generating circuit (3) or the asynchronous pulse generating circuit (4) so as to alternately inject onto the static switches (IS1, IS2), asynchronous pulses or pulses synchronized with the current.

6. The unit according to any of the preceding claims, **characterized in that** it includes means (5) for triggering the switching from the injection of synchronous pulses to that of asynchronous pulses and vice versa for a ramp voltage (V2) larger than the shunt voltage (V1).

7. The unit according to any of the preceding claims, **characterized in that** the shunt contactor (S) is a tetrapolar contactor mounted in such a way that each static switch (IS1 or IS2) is associated with two poles of this contactor.

## Patentansprüche

1. Steuergerät eines mehrphasigen Elektromotors (M), der zwei Phasen (L1, L3) umfasst, auf denen jeweils ein bidirektionaler statischer Schalter (IS1, IS2) angeordnet ist, der mit einem parallel geschalteten Nebenschluss-Schützpol (S) verknüpft ist, wobei diese Schalter (IS1, IS2, S) von einem Steuerkreis (C) gesteuert werden, der einen allmählichen Betrieb des Motors gewährleistet, **dadurch gekennzeichnet, dass** eine Phase (L2) weder von einem bidirektionalen statischen Schalter gesteuert noch von einem Nebenschlusspol umgangen wird, und dass der Steuerkreis (C) Mittel (1, 3, 4, 5) umfasst, um andauernd Impulse an den bidirektionalen statischen Schaltern (IS1, IS2) zu senden, kurz vor dem Befehl zum Schließen des Nebenschluss-Schützes (S) bis kurz vor dem Befehl zum Öffnen desselben Schützes.

2. Gerät nach Anspruch 1, **dadurch gekennzeichnet, dass** der Steuerkreis (C) eine sogenannte Rampenspannungsgeneratorschaltung (1) umfasst, deren Ausgangsspannung an einen Steuerkreis (2) des Nebenschluss-Schalters (S), eine Schaltung (3) zur Erzeugung synchroner Impulse und eine Schaltung (4) zur Erzeugung asynchroner Impulse gesendet wird, wobei diese beiden Schaltungen (3, 4) den Zünder (5) der statischen Schalter (IS1, IS2) steuern.

3. Gerät nach Anspruch 1 oder 2, **dadurch gekennzeichnet, dass** der Steuerkreis (2) des Nebenschluss-Schützes (S) Mittel zum Regeln des Schließens dieses Schützes (S) umfasst, wenn die Ausgangsspannung (Vr) des Rampengenerators (1) eine Umgehungsspannung (V1) erreicht.

4. Gerät nach Anspruch 3, **dadurch gekennzeichnet, dass** der Steuerkreis Mittel umfasst, um die Ausgangsspannung (Vr) des Rampengenerators (1) mit der sogenannten Umgehungsspannung (V1) zu vergleichen.

5. Gerät nach einem der Ansprüche 2 bis 4, **dadurch gekennzeichnet, dass** es Mittel zum Steuern der Schaltung (3) zur Erzeugung synchroner Impulse oder der Schaltung (4) zur Erzeugung asynchroner Impulse umfasst, um abwechselnd an den statischen Schaltern (IS1, IS2) asynchrone oder mit dem Strom synchronisierte Impulse einzukoppeln.

6. Gerät nach einem der vorhergehenden Ansprüche, **dadurch gekennzeichnet, dass** es Mittel (5) zum Auslösen des Übergangs der Einkopplung synchroner Impulse auf asynchrone Impulse und umgekehrt für eine Rampenspannung (V2), die größer ist als die Umgehungsspannung (V1), umfasst.

7. Gerät nach einem der vorhergehenden Ansprüche, **dadurch gekennzeichnet, dass** das Nebenschluss-Schütz (S) ein vierpoliges Schütz ist, das so geschaltet ist, dass mit jedem statischen Schalter (IS1 oder IS2) zwei Pole dieses Schützes verknüpft sind.
